# EUROPÄISCHE PATENTSCHRIFT

(11) **EP 3 385 185 B1**
(45) Veröffentlichungstag und Bekanntmachung des Hinweises auf die Patenterteilung: **20.05.2020**
(21) Anmeldenummer: 17165040.1
(22) Anmeldetag: 05.04.2017
(51) Int. Cl.: B65D 17/00

(54) **METALLISCHER DOSENDECKEL**
METALLIC CAN LID
COUVERCLE DE BOÎTE MÉTALLIQUE

(43) Veröffentlichungstag der Anmeldung: 10.10.2018
(60) Teilanmeldung: 20155960.6
(73) Patentinhaber: Piech, Gregor Anton, 6352 Ellmau (AT)
(72) Erfinder: Piech, Gregor Anton, 6352 Ellmau (AT)
(74) Vertreter: Manitz Finsterwald Patent- und Rechtsanwaltspartnerschaft mbB

(56) Entgegenhaltungen:
- EP-B1- 2 354 022
- DE-A1-102015 112 428

## Beschreibung

Die vorliegende Erfindung betrifft einen metallischen Dosendeckel mit einer wiederverschließbaren Öffnung, insbesondere für Getränkedosen sowie für Behältnisse zur Aufbewahrung von Lebensmitteln und sonstigen flüssigen, pastösen, pulverförmigen und/oder festen Produkten.

Aus der EP 1 607 341 A1 ist ein Dosendeckel mit einer wiederverschließbaren Öffnung bekannt, bei dem in dem metallischen Dosendeckel eine Öffnung eingebracht und der Rand dieser Öffnung umgebördelt ist, um eine Verankerungsmöglichkeit für ein vorgefertigtes Kunststoff-Verschlussteil zu schaffen. Das Kunststoff-Verschlussteil umfasst ein mit dem Bördelrand der Dosenöffnung zu verbindendes Basisteil, in dem eine durch einen Flachstopfen verschlossene Öffnung ausgebildet ist. Der Flachstopfen ist mit dem Öffnungsrand über eine Kunststoff-Reißnaht verbunden, so dass der mit einer Aufreißlasche verbundene Flachstopfen durch Zugausübung über die Aufreißlasche von dem Kunststoff-Basisteil gelöst und in eine Öffnungsstelle verschwenkt werden kann. Die Öffnung kann durch Eindrücken des an seiner Unterseite vorzugsweise konisch ausgebildeten Flachstopfens wieder vorübergehend verschlossen werden.

Wiederverschließbare Dosendeckel sind ferner beispielsweise in der DE 10 2010 013 531 A1 und der EP 2 354 022 B1 beschrieben.

Schließlich ist aus der DE 10 2015 112 428 A1 des Anmelders ein wiederverschließbarer Dosendeckel bekannt, auf dem die vorliegende Erfindung aufbaut und der durch die Erfindung noch wesentlich verbessert werden soll.

Aufgabe der Erfindung ist es daher, den bekannten wiederverschließbaren Dosendeckel so auszugestalten, dass seine Fertigung in noch wirtschaftlicherer Weise möglich ist, der konstruktive Aufbau vereinfacht wird, Materialersparnisse erreicht werden können und dabei gleichzeitig die Funktion verbessert wird.

Gelöst wird diese Aufgabe im Wesentlichen mit einem metallischen Dosendeckel mit einem in der metallischen Deckelfläche vorgesehenen, durch einen umlaufenden und deckelinnenseitig durch eine Folie abgedichteten Mikrospalt mit diesem benachbart verlaufender Einkerbung in der Folie, einem mit der festen Deckelfläche verbundenen und den Öffnungsbereich umschließenden Dichtungsrahmen aus Kunststoffmaterial, einer mit dem innerhalb des Mikrospalts gelegenen, aufschwenkbaren metallischen Deckelbereich verbundenen Verschließeinheit aus Kunststoffmaterial, die schwenkbar an der festen Deckelfläche angebracht und dem Schwenklagerbereich diametral gegenüberliegend mit einem Aufreißorgan versehen ist, wobei der Dichtungsrahmen und die Verschließeinheit über Dicht- und Rastrippen und zugehörige Aufnahmenuten zusammenwirken und der innerhalb des ringförmigen Mikrospalts gelegene metallische Deckelbereich, insbesondere form- und kraftschlüssig und insbesondere verzahnungsfrei, im Öffnungsbereich des Deckels aufgenommen und gehalten ist, und wobei die an der Deckelinnenseite vorgesehene, den Mikrospalt abdeckende Folie aus einem Formteil, insbesondere einem Tiefzieh-Formteil besteht, das die Unterseitenstruktur des eine durchgehende metallische Fläche bildenden Dosendeckels nachbildet, und sowohl der Dichtungsrahmen mit der festen Deckelfläche als auch die Verschließeinheit mit dem aufschwenkbaren metallischen Deckelbereich stoffschlüssig, insbesondere durch ein thermisches Verfahren unter Verwendung einer bevorzugt lebensmitteltauglichen und/oder Schmiereigenschaften aufweisenden Haftlackschicht, verbunden sind.

Durch das Zusammenspiel der Einzelmerkmale des erfindungsgemäßen Dosendeckels wird es möglich, sowohl den Dichtungsrahmen als auch die Verschließeinheit platzsparend und vorzugsweise in einer Vertiefung der Dosendeckelfläche auf der Oberseite des Dosendeckels unterzubringen und zu befestigen und damit die bei bekannten Konstruktionen erforderlichen Durchbrechungen der Dosendeckelfläche zu vermeiden. Dies erbringt auch Vorteile hinsichtlich der Hygiene, insbesondere im Zusammenhang mit der weiteren Besonderheit der Erfindung, die darin besteht, dass die Verschließeinheit auf ihrem gesamten Außenumfang eine sich bis zur festen Deckelfläche erstreckende Abdichtschürze aufweist, die vorzugsweise mit der festen Deckelfläche über die Haftlackschicht stoffschlüssig verbunden ist.

Auf diese Weise kann sichergestellt werden, dass die deckelaußenseitig gelegenen Kunststoffelemente nicht durch Verunreinigungen und dergleichen unterwandert werden können.

Die doseninnenseitig gelegene Unterseite des metallischen Dosendeckels, die von einer praktisch durchgehenden, lediglich den Mikrospalt beinhaltenden Metallfläche gebildet wird, ist wiederum über die Haftlackschicht mit dem die Abdichtung des Mikrospalts gewährleistenden Kunststofffolien-Formteil stoffschlüssig verbunden, wobei von Bedeutung ist, dass keine zur Verschließeinheit oder zum Dichtungsrahmen gehörenden Kunststoffteile sich durch das metallische Deckelmaterial erstrecken und demgemäß deckelunterseitig lediglich zwei Komponenten, nämlich der metallische Deckel einerseits und das Kunststoff-Formteil andererseits, miteinander in Berührung kommen und verbunden werden müssen.

Von Vorteil ist des Weiteren die bevorzugte Verwendung einer verzahnungs- bzw. hinterschneidungsfreien Zusammenfügung des aus der Deckelfläche zunächst ausgestanzten und dann wieder in die Deckelfläche zurückgedrückten, aufschwenkbaren Deckelbereichs, wobei die Erkenntnis genutzt wird, dass der Ausstanzvorgang so gestaltet werden kann, dass sich im Deckelmaterial über einen Teilbereich der Materialdicke eine konische Erweiterung erzielen lässt, die unter Ausbildung des erwünschten Mikrospalts eine form- und/oder kraftschlüssige Verbindung zwischen fester Deckelfläche und ausgestanztem Deckelbereich ermöglicht.

Die stoffschlüssige Verbindung kann insbesondere in einer Kunststoffschweißverbindung bestehen, wobei der Haftlack zur Haftvermittlung zwischen Kunststoff und Metall dient, oder in einer sogenannten Hotmelt-Verbindung.

Vorzugsweise sind der Dichtungsrahmen, die Verschließeinheit und das Folien-formteil bezüglich der metallischen Deckelfläche mittels vorzugsweise punktförmiger Positioniernoppen und zugehöriger, insbesondere napfförmiger Vertiefungen gegenseitig exakt ausgerichtet.

Während die Noppen für die an der Außenseite des Dosendeckels positionierten Kunststoffteile bevorzugt an diesem Kunststoffteil ausgebildet sind, wirken die napfförmigen Vertiefungen zur Aufnahme der Noppen des Dichtungsrahmens an der Unter- oder Innenseite des Deckels gleichzeitig als Noppen zur Positionierung des Kunststoff-Formteils, das entsprechend komplementäre Vertiefungen aufweist.

Der fertige Dosendeckel besteht bevorzugt aus einem Verbundwerkstoff in Form einer beidseitig mit einem Haftlack beschichteten und innenseitig über die Haftlackschicht mit dem Folienformteil verbundenen Blechlage, insbesondere aus Aluminium oder Weißblech, wobei die mechanische Festigkeit der Folienkomponente im Verbundwerkstoff zweckmäßigerweise derart gewählt ist, dass unter Gewährleistung der geforderten Gesamtfestigkeit des Verbundwerkstoffs die Materialstärke der metallischen Komponente im Vergleich zu einer folienfreien Komponente reduzierbar, insbesondere um zumindest 1 % reduzierbar ist.

In Anbetracht der riesigen Stückzahl von in der Praxis gefertigten Dosendeckeln spielt eine derartige Materialeinsparung, auch wenn sie beispielsweise nur 1 % beträgt, unter wirtschaftlichen Aspekten bereits eine vergleichsweise große Rolle und stellt demgemäß einen entsprechenden Vorteil dar.

Nach einer weiteren Ausgestaltung der Erfindung erstreckt sich das Folien-Formteil des Verbundwerkstoffs bis in den zur Verbindung des Deckels mit einer Dose vorgesehenen Bördelrand und wirkt dort als Dichtmaterial und Korrosionsschutz.

Da bei herkömmlichen Dosen im Bereich der Bördelverbindung üblicherweise zusätzliches Dichtmaterial erforderlich ist, kann durch die erfindungsgemäße Maßnahme wiederum eine praktisch relevante Einsparung und Kostenreduzierung erreicht werden.

Der an die Verschließeinheit angeformte Schwenklagerbereich besitzt zwischen seinem Befestigungsbereich und dem Schwenkteil einen deckelseitig geschlossenen, sich beidseitig zwickelartig erweiternden und als Kippfeder wirkenden Bügelbereich, der eine bistabile Positionierung der Verschließeinheit ermöglicht. Diese Anordnung stellt sicher, dass die Verschließeinheit bei Überschreiten eines Öffnungswinkels von ca. 90° auf einen Öffnungswinkel von mehr als 130° bewegt und in dieser Position offengehalten wird, während bei einem Unterschreiten eines Winkels von ca. 90° aus der Offenstellung die Verschließeinheit auf eine Öffnungswinkelstellung von kleiner 30° zurückschnappt. Aus dieser Position kann die Verschließeinheit wieder problemfrei in die abdichtende Schließlage gedrückt werden. Dieser Vorgang kann mehrfach reversibel in beiden Richtungen durchgeführt werden.

Wichtig ist dabei auch die außenseitig geschlossene Ausbildung dieses als Kippfeder wirkenden Bereichs, da dadurch die bei herkömmlichen Lösungen häufig vorhandenen Spalte, die zur Verschmutzung neigen, vermieden werden.

Von besonderer Bedeutung für die Funktion des erfindungsgemäßen wiederverschließbaren Dosendeckels sind die Ausgestaltung von Dichtungsrahmen und Verschließeinheit. Dichtungsrahmen und Verschließeinheit wirken über eine innenliegende Dichtrippe und eine außenliegende Rastrippe, welche in entsprechende Aufnahmenuten eingreifen, zusammen. Zwischen der Dichtrippe und einer Wandung der zugehörigen Aufnahmenut ist dabei eine vorgebbare Schrägflächen-Dichtpaarung vorgesehen, wobei die Wahl der Schräge davon abhängig ist, welchem Doseninnendruck nach erfolgtem Wiederverschließen der Dose standgehalten werden muss, wobei gleichzeitig zu berücksichtigen ist, dass der Öffnungsvorgang dadurch nicht störend erschwert wird.

Die Rastrippe ist mit einem kurzen Schrägflächenansatz versehen, der mit einer Gegenrast der zugehörigen Aufnahmenut zusammenwirkt, wobei zwischen den beiden zusammenwirkenden Flächen bei verschlossener Dosenöffnung ein vorgebbares Spiel vorgesehen ist.

Dieses geringe Spiel kann dazu genutzt werden, während der Öffnungsbewegung der Verschließeinheit einen Überdruckabbau zu ermöglichen, ohne dass in dieser Phase der Deckel schon so weit geöffnet ist, dass die Gefahr eines Herausspritzens von Flüssigkeit bestehen würde.

Eine weitere, im Hinblick auf die stets angestrebte Reduzierung der Fertigungskosten von Dosendeckeln wichtige Besonderheit der Erfindung besteht darin, dass der Dosendeckel zumindest im Wesentlichen aus der gleichen Aluminiumlegierung wie das mit ihm verbundene Behälterteil besteht und die metallische Materialstärke des Dosendeckels im Wesentlichen gleich der Materialstärke des Behälterteils ist und vorzugsweise zumindest den zweifachen Wert der Materialstärke des Behälterteils nicht überschreitet, wobei die Materialstärke des Behälterteils im Bereich von etwa 0,1 mm und weniger gelegen ist.

Bekannte Dosen, insbesondere Getränkedosen, bestehen aus Aluminiumlegierungen, wobei es üblich ist, für den zylindrischen Dosenteil eine Aluminiumlegierung der Serie 3000 und für den Deckelteil eine Aluminiumlegierung der Serie 5000 zu verwenden, um den unterschiedlichen technischen Anforderungen hinsichtlich Dosenteil und Deckelteil Rechnung zu tragen. Bisher ist es nur gelungen die Wandungsstärke der Dosenwand bis auf etwa 0,09 mm zu reduzieren, und zwar durch Verwendung von Aluminiumlegierung der Serie 3000, die preiswerter ist als die Aluminiumlegierung der Serie 5000, welche üblicherweise als Deckelmaterial eingesetzt wird. Die Wandungsstärke des Deckelmaterials muss zumindest doppelt so groß sein wie die Materialstärke der Dosenwand, um trotz der bei bekannten Deckeln im Deckelmaterial auszubildenden Einkerbung zur Schaffung einer Aufreißnut die notwendige Druckfestigkeit der Dose zu gewährleisten. Diese Einkerbung besitzt eine Tiefe, die typischerweise etwa der Hälfte der Materialstärke des Dosendeckels entspricht. Durch den Einsatz der höherwertigen Legierungsserie Aluminium 5000 können aber alle Anforderungen an den Dosendeckel hinsichtlich der Öffnungskriterien und der Dichtheit erfüllt werden.

Neben der durch Materialwahl bzw. Ausgestaltung des Verbundmaterials und Gewichtsverringerung erzielten Einsparung an Fertigungskosten ist es von wesentlicher Bedeutung, dass es auch aufgrund der speziellen Mikrospaltgestaltung nicht mehr erforderlich ist, für das Deckelmaterial ein spezielles Material, wie z.B. eine Aluminiumlegierung der Serie 5000, insbesondere 5182, zu verwenden, da nunmehr auch für das metallische Deckelmaterial ein preisgünstiges Aluminium der Serie 3000 eingesetzt werden kann.

Des Weiteren betrifft die Erfindung ein Verfahren gemäß Anspruch 14, zur Herstellung einer dichten, aufreißbaren oder eindrückbaren und vorzugsweise wiederverschließbaren Öffnung in einem Dosendeckel, der wiederverschließbar ausgebildet ist bei dem der Öffnungsbereich entweder aufreißbar ist oder in das Doseninnere gedrückt werden kann.

Weitere Einzelheiten und Vorteile der Erfindung sind in den Unteransprüchen angegeben und werden bei der nachfolgenden Beschreibung eines Ausführungsbeispiels unter Bezugnahme auf die Zeichnung erläutert.

In der Zeichnung zeigt:
- Fig. 1: eine Draufsicht auf einen Dosendeckel für eine Getränkedose,
- Fig. 2: eine Seitenansicht des Dosendeckels nach Fig. 1,
- Fig. 3: eine Schnittansicht entsprechend der Linie A-A in Fig. 1,
- Fig. 4: eine vergrößerte Darstellung des Details B in Fig. 3,
- Fig. 5: eine vergrößerte Darstellung des Details C aus Fig. 3,
- Fig. 6: eine weiter vergrößerte Darstellung des Details D aus Fig. 5 zur Erläuterung des Kupplungsmechanismus zwischen Dichtungsrahmen und Verschließeinheit, und
- Fig. 7: eine schematische Darstellung zur Erläuterung der Umfangsrandgestaltung des den Öffnungsbereich des Dosendeckels definierenden Stanzteils.

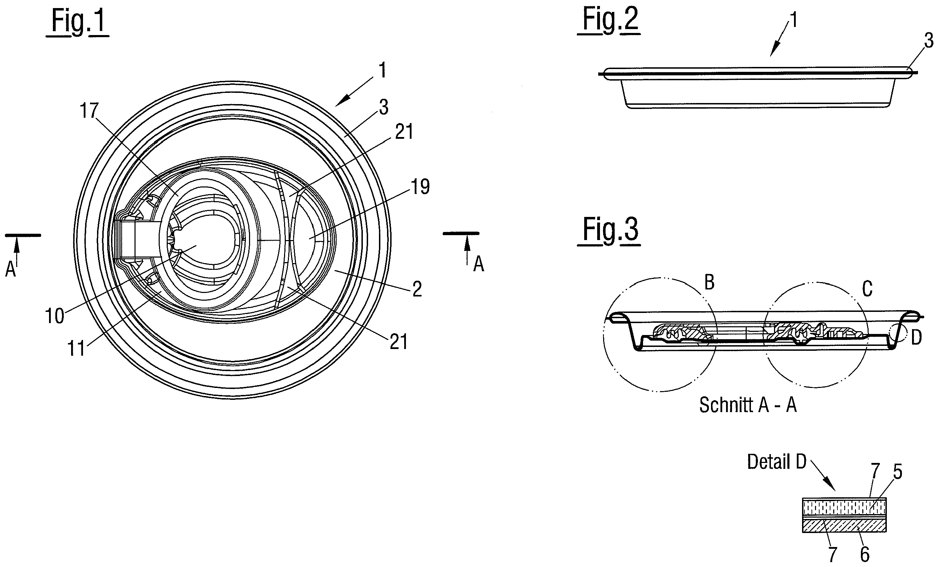

Die Draufsicht nach Fig. 1 zeigt einen insbesondere für eine Getränkedose bestimmten Dosendeckel 1, in dessen Deckelfläche ein wiederverschließbares Öffnungssystem integriert ist.

Dazu ist im Dosendeckel ein Deckelbereich 10 vorgesehen, der über im Einzelnen noch darzustellende und zu beschreibende Mittel über ein Aufreißorgan 17 geöffnet und hochgeschwenkt werden kann, und zwar über einen Schwenklagerbereich, dessen fester Teil 19 am Dosendeckel befestigt ist. Zwischen diesem festen Teil 19 und einer mit dem metallischen Deckelbereich 10 fest verbundenen Verschließeinheit 11 ist dabei ein Kippfederabschnitt 21 vorgesehen, der es gestattet, die Verschließeinheit 11 bei Überschreiten eines Öffnungswinkels von ca. 90° auf mehr als 130° zu öffnen, d.h. die Verschließeinheit in ihre End-Öffnungsstellung schnappen zu lassen. Unterschreitet die Verschließeinheit im Zuge des Schließens einen Öffnungswinkel von ca. 90°, so schnappt die Verschließeinheit auf einen Öffnungswinkel kleiner 30° zurück, und aus dieser Teil-Öffnungsstellung kann die Verschließeinheit wieder manuell problemlos in die abdichtende Schließlage gedrückt werden. Dieser Vorgang kann mehrfach reversibel in beiden Richtungen durchgeführt werden.

Der Dosendeckel 1 wird mit dem zugehörigen Behältnis bevorzugt über einen Bördelrand 3 verbunden.

Die Seitenansicht des Dosendeckels 1 nach Fig. 1 verdeutlicht, dass das erfindungsgemäße Verschluss- und Öffnungssystem von derart flacher Bauweise ist, dass es vollständig innerhalb der Tiefe des Deckelteils aufgenommen wird und in der Schließstellung keinerlei Teile über die Deckelkontur überstehen.

Fig. 3 zeigt einen Schnitt durch den Deckel nach Fig. 1 entsprechend der Schnittlinie A-A, wobei die für Aufbau und Funktion besonders wichtigen Detailbereiche mit B und C gekennzeichnet sind, die nachfolgend im Einzelnen erläutert werden.

Das dargestellte Detail D zeigt in stark vergrößerter Weise den strukturellen Aufbau einer Hauptkomponente des Dosendeckels in Form eines Verbundwerkstoffs.

Diese Hauptkomponente des Dosendeckels besteht aus einer geeignet geformten Blechlage 5 aus Aluminium oder Weißblech, und diese Blechlage ist beidseits jeweils mit einer Haftlackschicht 7 versehen, die als Haftvermittler dient und es ermöglicht, eine hochfeste und dauerhafte stoffschlüssige Verbindung zwischen Metall, insbesondere Aluminium und dem vorzugsweise aus Polypropylen bestehenden Kunststoff der Folie 6 zu gewährleisten, der an der Deckelunterseite, d.h. doseninnenseitig vorgesehen und lebensmittelgeeignet ist. Die gegenseitige Verbindung der einzelnen Komponenten des Verbundwerkstoffs erfolgt vorzugsweise in einem sogenannten Heiß-Siegel-Verfahren, bei welchem der Kunststoff angeschmolzen wird, so dass sich eine stoffschlüssige Verbindung mit dem Metall ergibt.

Obwohl die Materialstärke des metallischen Dosendeckelteils aufgrund der Verwendung der eingangs bereits geschilderten Mikrospalttechnologie im Gegensatz zu Dosendeckeln mit aufreißbarer Ritzlinie bereits verringert werden kann, ist es von Vorteil, den geschilderten Verbundwerkstoff zu verwenden, da es der Verbundwerkstoff gestattet, ohne Einbußen hinsichtlich der geforderten Festigkeitswerte die Materialstärke der Blechlage weiter zu verringern und dadurch in der Praxis bedeutsame Material- bzw. Kosteneinsparungen zu erreichen.

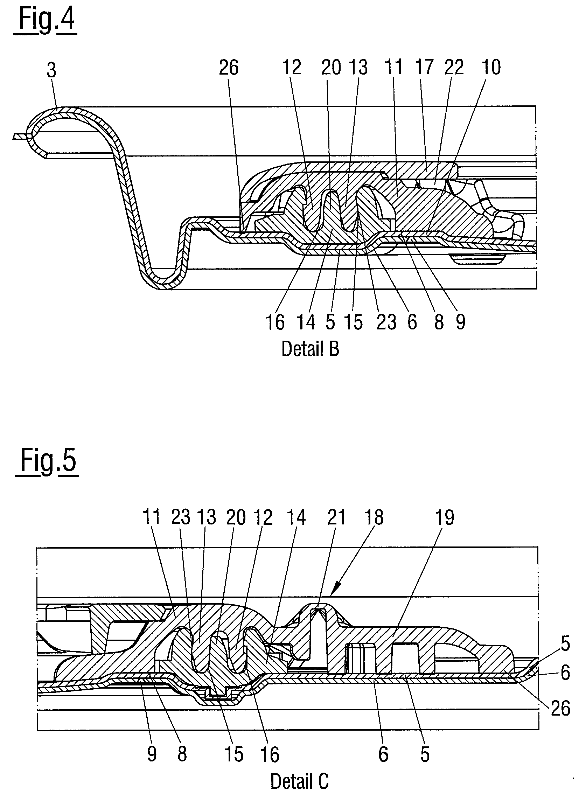

Fig. 4 zeigt vergrößert den Bereich B nach Fig. 3, d.h. den Bereich, an dem das Aufreißorgan 17 am aufschwenkbaren Deckelteil befestigt ist, und zwar an dessen äußerem Rand, so dass sich beim Hochziehen des Deckelteils auch aufgrund der Elastizität des Deckelmaterials insbesondere ein Hebeleffekt ergibt, der das Öffnen des Deckelteils begünstigt.

Die mit der Blechlage 5 über die Haftlackschicht 7 stoffschlüssig verbundene Kunststofffolie 6 entspricht in ihrer Formteilkontur der Kontur der Unterseite des Blechdeckelteils 5 und erstreckt sich bevorzugt in den Bördelbereich 3, wo sie gleichzeitig als Dichtung und Korrosionsschutz wirken kann.

Im Dosendeckelmaterial 5 ist der in Fig. 1 angedeutete aufschwenkbare Deckelbereich 10 vorgesehen, der erfindungsgemäß nicht wie im üblichen Stand der Technik von einer Materialschwächung, sondern vielmehr von einem Mikrospalt 8 begrenzt wird. Dieser umlaufende Mikrospalt 8 wird bevorzugt dadurch gebildet, dass aus dem Blechmaterial der Deckelbereich 10 ausgestanzt und anschließend wieder in die Öffnung zurückgedrückt und durch Klemmung gehalten wird, so dass wiederum eine ebene Metallfläche vorliegt und der metallische, beidseitig mit einer Haftlackschicht versehene Deckel wieder als einheitliches Teil gehandhabt werden kann.

Unabhängig von der konkret verwendeten Methode zur Herauslösung des aufschwenkbaren Deckelbereichs aus dem Deckelmaterial liegt im Bereich des Mikrospalts lediglich eine durch Klemmhalterung gebildete Verbindung vor, so dass beim erstmaligen Öffnen einer mit dem erfindungsgemäßen Deckel versehenen Dose keinerlei Metalltrennung mehr erfolgen muss und somit die sonst unvermeidliche Bildung von metallischen Mikropartikeln ausgeschlossen wird. Diese Vermeidung des Entstehens von Mikropartikeln beim Öffnungsvorgang, insbesondere Mikropartikeln aus Aluminium, ist unter Gesundheitsaspekten von Bedeutung, denn solche Mikropartikel gelangen unvermeidbar auch in das in der jeweiligen Dose enthaltene Produkt und damit auch in den menschlichen Körper.

Der Mikrospalt 8, der bevorzugt von einer geraden, bzw. gekrümmten und unverzahnten Linie gebildet wird, ist unterseitig, d.h. deckelinnenseitig von der Kunststofffolie bedeckt und damit abgedichtet. Die Kunststofffolie, die vorzugsweise aus lebensmittelgeeignetem Polypropylen besteht, besitzt dem Mikrospalt benachbart eine Einkerbung 9, die umlaufend gleiche oder gegebenenfalls auch unterschiedliche Tiefe besitzen kann und sicherstellt, dass zum Öffnen des Deckels nur eine vergleichsweise geringe Kraft benötigt wird. Der Abstand zwischen dem Mikrospalt 8 und der Einkerbung 9 beträgt vorzugsweise etwa das Doppelte der Folienstärke, also beispielsweise 3 bis 4 Zehntel Millimeter.

Die erforderliche Öffnungskraft ist nicht nur davon abhängig, welche Kraft zur Trennung der Verbindung zwischen Blechlage 5 und Kunststofffolie 6 im Bereich des Mikrospalts 8 benötigt wird, sondern auch noch von der Dichtungspaarung, die im Zusammenwirken von Dichtungsrahmen 14 und Verschließeinheit 11 realisiert ist.

Der Dichtungsrahmen 14 aus Kunststoffmaterial, insbesondere Polypropylen, umschließt den Öffnungsbereich und ist, vorzugsweise in einer Vertiefung der Blechlage 5, über die bereits erwähnte Haftlackschicht 7 fest mit dem metallischen Deckelmaterial verbunden. Dabei ist es möglich, diese feste Verbindung nur im Bodenbereich der Vertiefung vorzusehen.

Der Dichtungsrahmen 14 besitzt zwei durch einen Mittelsteg 20 voneinander getrennte Aufnahmenuten 15, 16 für eine Rastrippe 12 und eine Dichtrippe 13, die an der Verschließeinheit 11 vorgesehen sind. Diese ebenfalls aus Kunststoffmaterial, vorzugsweise Polypropylen, bestehende Verschließeinheit 11 ist analog zum Dichtungsrahmen 14 fest mit dem metallischen Deckel verbunden, jedoch nicht mit der ortsfesten Deckelfläche 2, sondern vielmehr mit dem aufschwenkbaren Deckelbereich 10. Das aufschwenkbare Deckelteil wird somit von dem durch den Mikrospalt 8 begrenzten metallischen Deckelbereich 10 und die daran randseitig befestigte Verschließeinheit 11 gebildet, an die auch das Aufreißorgan 17 angeformt ist.

Dieses mit dem Außenrand der Verschließeinheit 11 verbundene Aufreißorgan 17 ist mit einem Halte- oder Fixierelement 22 versehen, das sich zum Deckelteil hin erstreckt und dort leicht lösbar fixiert ist, so dass sich anhand dieser Verbindung die Unversehrtheit der jeweiligen Verpackung einfach überprüfbar ist.

Dem Aufreißorgan 17 diametral gegenüberliegend ist an der Verschließeinheit 11 ein an diesen Rahmen angeformter Schwenklagerbereich 18 ausgebildet, der fest mit der außerhalb des aufschwenkbaren Deckelteils gelegenen Deckelfläche verbunden ist, was noch anhand der Fig. 5 erläutert wird.

Fig. 5 zeigt in vergrößerter Darstellung den Detailbereich C nach Fig. 3, d.h. den dem Aufreißorgan 17 diametral gegenüberliegenden Schwenklagerbereich 18 in Verbindung mit Dichtungsrahmen und Verschließeinheit 11, die im geschlossenen Zustand des Dosendeckels in der gezeigten Weise miteinander in Eingriff sind und eine dichte Schnapp-Rastverbindung bilden.

Funktionsmäßig sind die in der Aufnahmenut 16 aufgenommene Rippe 13 und die in der Aufnahmenut 15 aufgenommene Rippe 12 unterschiedlich, d.h. es liegen zumindest zum Teil getrennte Funktionen vor, wodurch eine Optimierung des Zusammenwirkens von Dichtungsrahmen 14 und Verschließeinheit 11 ermöglicht wird. Die Verschließeinheit 11 ist mit dem festen Teil des Schwenklagers über einen mit einem integrierten, bistabilen Kippfederabschnitt 21 verbunden. Dieser hält das Deckelteil, bestehend aus dem metallischen Deckelbereich 10, der daran befestigten Verschließeinheit 11 und dem Aufreißorgan 17 bei Überschreiten von ca. 90° auf mehr als 130° offen, so dass der Innenraum des jeweiligen Behältnisses optimal zugänglich ist. Bei Unterschreiten von ca. 90° schnappt das Deckelteil auf einen Öffnungswinkel kleiner 30° zurück. Aus dieser Offenstellung kann das Deckelteil wieder in die abdichtende Schließlage überführt bzw. gedrückt werden. Dieser Vorgang kann mehrfach reversibel in beiden Richtungen durchgeführt werden.

Von oben betrachtet stellt der Schwenklagerbereich 18 einen praktisch geschlossenen Bereich dar, d.h. es werden die vor allem im Kippfederbereich bei bekannten Lösungen häufig vorhandenen Spalte und Öffnungen vermieden. Von besonderer Bedeutung unter hygienischen Aspekten ist aber das weitere Merkmal der Erfindung, dass die Verschließeinheit 11 auf ihrem gesamten Außenumfang mit einer sich bis zur festen Deckelfläche 2 erstreckende Abdichtschürze 26 versehen ist, die vorzugsweise mit der Deckelfläche 2 über die Haftlackschicht stoffschlüssig verbunden ist. Auf diese Weise wird sicher verhindert, dass irgendwelche Verunreinigungen, Feuchtigkeit und dergleichen unter die Kunststoffelemente gelangen kann, d.h. es wird in hygienischer Hinsicht ein Optimum erreicht, das bei herkömmlichen wiederverschließbaren Dosendeckeln dieser Art nicht gegeben ist. Diese Verbindung wird beim erstmaligen Öffnen getrennt.

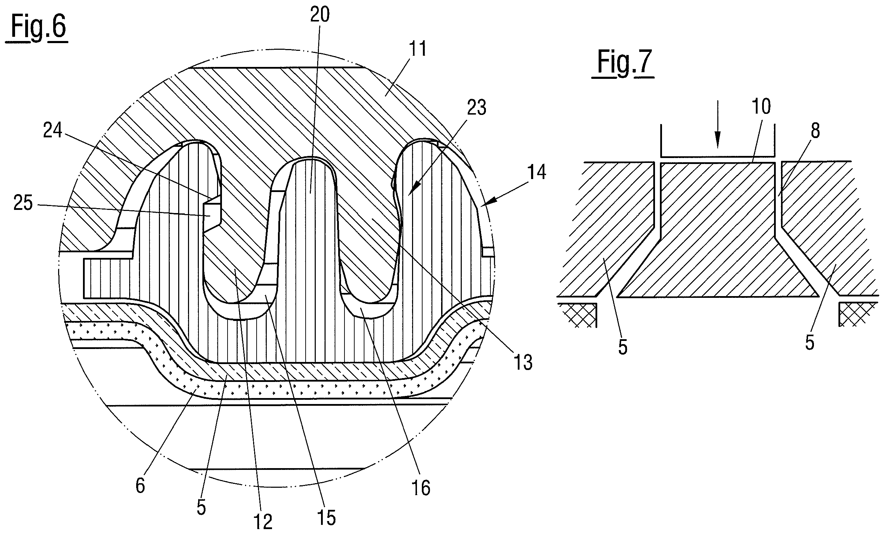

Wie dies in der weiter vergrößerten Detaildarstellung nach Fig. 6 zu erkennen ist, bildet die Dichtrippe 13 mit der Aufnahmenut 16 eine Dichtflächenpaarung 23. Diese Dichtflächenpaarung 23 trägt beim Schließvorgang zum Einschnappvorgang bei und hält die Verschließeinheit im geschlossenen Zustand in einer definierten Position.

Durch Vorgabe der Neigung der miteinander zusammenwirkenden Dichtflächen der Dichtflächenpaarung 23 kann aber auch der Öffnungswiderstand eingestellt werden, d.h. es kann eine Schrägflächenpaarung gewählt werden, die sicherstellt, dass einerseits dem jeweils auftretenden Innendruck standgehalten und zum anderen der Öffnungsvorgang nicht zu sehr erschwert wird.

Die Rastrippe 12 und die zugehörige Aufnahmenut 15 besitzen ebenfalls kurze, miteinander zusammenwirkende Schrägflächen, die einerseits die Rastverschnappung sichern, andererseits aber auch eine geringe freie Relativbewegung in Form eines Spiels 25 zwischen der Gegenrast 24 und der an der Rastrippe 12 vorgesehenen kurzen Schrägfläche ermöglichen. Diese freie Beweglichkeit kann dazu ausgenutzt werden, beim wiederholten Öffnen des Dosendeckels eine kleine Anfangsöffnungsbewegung zuzulassen, bei der ein eventuell vorhandener Innendruck abgebaut wird, ohne dass der Deckel bereits so weit geöffnet ist, dass in gegebenenfalls störender Weise Flüssigkeit austreten könnte.

Die schematische Darstellung nach Fig. 7 verdeutlicht einen bevorzugt verwendeten Vorgang des Ausstanzens des Deckelbereichs 10 aus der Blechlage 5 und das anschließend oder später wieder erfolgende Einfügen des ausgestanzten Bereichs in die gebildete Öffnung. Der speziell gewählte Ausstanzvorgang, d.h. die spezielle Wahl von Stempel und Matrize führt dazu, dass die Umfangskontur des ausgestanzten Bereichs über seine Dicke betrachtet, einen Glattschnittabschnitt und einen Schrägschnittabschnitt aufweist, die es ermöglichen bzw. erleichtern, den ausgestanzten Blechlagenbereich unter Ausbildung eines Mikrospalts sofort oder zu einem späteren Zeitpunkt wieder in die ausgestanzte Öffnung zu drücken, und zwar derart, dass der ausgestanzte Bereich mit zur Weiterverarbeitung ausreichender Klemmung in der Öffnung gehalten wird.

Ein besonderer Vorteil ergibt sich bei dem geschilderten Stanzvorgang, wenn die Beschichtung der Blechlage mit einer Haftlackschicht mit Schmiermitteleigenschaften erfolgt, da hierdurch jegliche zusätzliche sonst bei einem Stanzvorgang benötigten Schmiermittel entbehrlich sind, da die Haftlackschicht allein beim Stanzvorgang das benötigte Schmiermittel liefert. Dies bedeutet, dass ein lebensmitteltaugliches Schmiermittel vorliegt, da die erfindungsgemäß verwendeten Haftlackschichten lebensmitteltauglich sind und demgemäß keine aufwändigen Reinigungsschritte benötigt werden, wie dies im Falle eines sonst zusätzlich benötigten Schmiermittels üblicherweise der Fall wäre.

Bevorzugt werden Stempel und Matrize so gewählt, dass der sich ergebende Glattschnittabschnitt sich über weniger als 50% der Materialdicke erstreckt und der restliche Schrägschnittabschnitt sich im Wesentlichen konisch erweitert. Dadurch wird ein ausreichender Kraftschluss erzielt, wenn das ausgestanzte Teil wieder in die Blechlage eingefügt bzw. eingedrückt wird, und es ist nicht mehr erforderlich, spezielle Verzahnungen oder Hinterschneidungen zwischen ausgestanztem Teil und Blechlage vorzusehen, um die notwendigen Haltekräfte zu erzielen.

In der praktischen Handhabung ist der wiederverschließbare Dosendeckel nach der Erfindung auch deshalb vorteilhaft, weil das bevorzugt als Ringlasche ausgebildete Aufreißorgan 17 gut zugänglich ist, leicht ergriffen werden kann und über eine bequem ausführbare Zugbewegung ein Öffnen der jeweiligen Dose ermöglicht. Beim Wiederverschließen besteht der Vorteil, dass das vollständige Wiederverschließen durch die Schnapp-Rastverbindung bevorzugt fühlbar und außerdem akustisch wahrnehmbar ist.

Verwendbar ist der erfindungsgemäße Dosendeckel für alle Arten von Behältnissen, die wiederverschließbar sein sollen, wobei die dichte Verbindung des Dosendeckels mit dem jeweiligen Behältnis nicht nur über einen Bördelrand, sondern vor allem bei nichtmetallischen Behältnissen auch über Klebeverbindungen, Schweißverbindungen und dergleichen erfolgen kann.

Die Erfindung ist ferner gerichtet auf ein Verfahren zur Herstellung einer dichten, aufreißbaren oder eindrückbaren und vorzugsweise wiederverschließbaren Öffnung in einem flächigen Blechmaterial, insbesondere in einem Dosendeckel, wie dies in den Ansprüchen 14 bis 18 im Einzelnen geschildert ist.

Dieses Fertigungsverfahren, das mit einer vorzugsweise beidseitig mit einer lebensmitteltauglichen Haftlackschicht beschichteten Blechlage arbeitet, ist sowohl zur Herstellung von Dosendeckeln der im Rahmen dieser Erfindung beschriebenen Art sowie auch zur Herstellung von Standard-Dosendeckeln geeignet. Bei derartigen Standard-Dosendeckeln ist zum Öffnen des jeweiligen Öffnungsbereichs ein zweiarmiges Hebelorgan vorgesehen, das mit dem Deckelmaterial fest verbunden ist. Der Öffnungsbereich ist dabei als Zungenlasche ausgebildet, die von der Deckelfläche durch einen sich über den Laschenumfang erstreckenden Mikrospalt getrennt ist, wobei die mit der Deckelfläche verbundene Zungenlaschenbasis ein beim Öffnungsvorgang wirksam werdendes Knicklager bildet. Dabei ist die Unterseite des metallischen Deckels mit einer Kunststofffolie kaschiert oder laminiert. Diese Folie ist dem Mikrospalt benachbart geschwächt ausgeführt, um ein problemfreies Öffnen der jeweiligen Dose zu gewährleisten. Wenn die Anordnung so getroffen ist, dass die Zungenlasche beim Öffnungsvorgang zusammen mit dem sie unterseitig bedeckenden, durch die Schwächungslinie begrenzenden Teilbereich der Kunststoffbeschichtung in das Doseninnere verschwenkt wird, ist die Schwächungslinie außerhalb des Mikrospalts gelegen.

Wenn die Anordnung derart getroffen ist, dass die Zungenlasche beim Öffnungsvorgang zusammen mit dem sie unterseitig bedeckenden, durch die Schwächungslinie begrenzten Teilbereich der Kunststoffbeschichtung nach außen verschwenkt wird, dann ist die Schwächungslinie innerhalb des Mikrospalts gelegen. Details derartiger Standard-Dosendeckel sind in der deutschen Patentanmeldung DE 10 2015 122 548.4 beschrieben.

Das erfindungsgemäße Verfahren kann im Zusammenhang mit wiederverschließbaren Dosendeckeln der beschriebenen Art so gestaltet werden, dass das ausgestanzte Deckelteil im Verlauf des Rückhubs durch Federkraft gleich wieder unmittelbar in die Blechlage gedrückt und dort kraftschlüssig gehalten wird, aber es ist auch möglich, die Blechlage einerseits und den ausgestanzten Teilbereich andererseits getrennt weiteren Fertigungsstufen zuzuführen, in denen sie mit den zur Realisierung der wiederverschließbaren Öffnung benötigten Kunststoffelementen verbunden werden, und anschließend die beiden Komponenten zusammenzufügen und miteinander in der vorstehend bereits beschriebenen Weise dauerhaft zu verbinden, wobei dann der funktionsfähige wiederverschließbare Dosendeckel erhalten wird.

### Bezugszeichenliste

- 1: Dosendeckel
- 2: feste Deckelfläche
- 3: Bördelrand
- 4: Verbundwerkstoff
- 5: Blechlage (Aluminium, Weißblech)
- 6: Kunststofffolie, Formteil
- 7: Haftlackschicht
- 8: Mikrospalt
- 9: Einkerbung
- 10: Deckelbereich, aufschwenkbar
- 11: Verschließeinheit
- 12: Rastrippe
- 13: Dichtrippe
- 14: Dichtungsrahmen
- 15: Aufnahmenut innen
- 16: Aufnahmenut außen
- 17: Aufreißorgan
- 18: Schwenklagerbereich
- 19: fester Teil des Schwenklagers, Befestigungsbereich
- 20: Mittelsteg
- 21: Kippfederabschnitt
- 22: Fixierelement
- 23: Schrägflächen-Dichtpaarung
- 24: Gegenrast
- 25: Spiel
- 26: Abdichtschürze

## Patentansprüche

1. Metallischer Dosendeckel (1) mit einer wiederverschließbaren Öffnung, insbesondere für Getränkedosen sowie für Behältnisse zur Aufbewahrung von Lebensmitteln und sonstigen flüssigen, pastösen, pulverförmigen und/oder festen Produkten,
mit einem in der metallischen Deckelfläche vorgesehenen, umlaufenden und deckelinnenseitig durch eine Folie (6) abgedichteten Mikrospalt (8) mit diesem benachbart verlaufender Einkerbung (9) in der Folie,
einem mit der festen Deckelfläche (2) verbundenen und den Öffnungsbereich umschließenden Dichtungsrahmen (14) aus Kunststoffmaterial, einer mit dem innerhalb des Mikrospalts (8) gelegenen, aufschwenkbaren metallischen Deckelbereich (10) verbundenen Verschließeinheit (11) aus Kunststoffmaterial, die schwenkbar an der festen Deckelfläche (2) angebracht und dem Schwenklagerbereich (18) diametral gegenüberliegend mit einem Aufreißorgan (17) versehen ist,
wobei der Dichtungsrahmen (14) und die Verschließeinheit (11) über Dicht- und Rastrippen (12, 13) und zugehörige Aufnahmenuten (15, 16) zusammenwirken und der innerhalb des ringförmigen Mikrospalts (8) gelegene metallische Deckelbereich (10), insbesondere form- und/oder kraftschlüssig und bevorzugt verzahnungsfrei, im Öffnungsbereich des Deckels aufgenommen und gehalten ist, und wobei die an der Deckelinnenseite vorgesehene, den Mikrospalt (8) abdeckende Folie (6) aus einem Formteil, insbesondere einem Tiefzieh-Formteil besteht, das die Unterseitenstruktur des eine durchgehende metallische Fläche bildenden Dosendeckels nachbildet,
**dadurch gekennzeichnet,**
**dass** sowohl der Dichtungsrahmen (14) mit der festen Deckelfläche (2) als auch die Verschließeinheit (11) mit dem aufschwenkbaren metallischen Deckelbereich (10) stoffschlüssig, insbesondere durch ein thermisches Verfahren unter Verwendung einer bevorzugt lebensmitteltauglichen und/oder Schmiereigenschaften aufweisenden Haftlackschicht (7), verbunden sind.

2. Dosendeckel nach Anspruch 1,
**dadurch gekennzeichnet,**
**dass** der Dichtungsrahmen (14), die Verschließeinheit (11) und das Folienformteil (6) bezüglich der metallischen Deckelfläche mittels vorzugsweise punktförmiger Positioniernoppen und zugehöriger, insbesondere napfförmiger Vertiefungen gegenseitig exakt ausgerichtet sind.

3. Dosendeckel nach Anspruch 1,
**dadurch gekennzeichnet,**
**dass** der Dosendeckel von einem Verbundwerkstoff in Form einer beidseitig mit einem Haftlack (7) beschichteten und innenseitig über die Haftlackschicht (7) mit dem Folienformteil (6) verbundenen Blechlage (5), insbesondere aus Aluminium oder Weißblech, gebildet ist, und
**dass** über die außenliegende Haftlackschicht (7) der Dichtungsrahmen (14), die Verschließeinheit (11) und der Schwenklagerbereich (18), insbesondere durch Kunststoffschweißen oder eine sogenannte Hotmelt-Verbindung, dauerhaft mit der Blechlage (5) verbunden sind.

4. Dosendeckel nach Anspruch 3,
**dadurch gekennzeichnet,**
**dass** die mechanische Festigkeit der Folienkomponente im Verbundwerkstoff (4) derart gewählt ist, dass unter Gewährleistung der geforderten Gesamtfestigkeit des Verbundwerkstoffs die Materialstärke der metallischen Komponente im Vergleich zu einer folienfreien Komponente reduzierbar, insbesondere um zumindest 1 % reduzierbar ist.

5. Dosendeckel nach einem oder mehreren der vorhergehenden Ansprüche,
**dadurch gekennzeichnet,**
**dass** sich das Folien-Formteil (6) des Verbundwerkstoffs (4) bis in den zur Verbindung des Deckels mit einer Dose vorgesehenen Bördelrand (3) erstreckt und dort als Dichtmaterial und Korrosionsschutz wirkt.

6. Dosendeckel nach einem oder mehreren der vorhergehenden Ansprüche,
**dadurch gekennzeichnet,**
**dass** der an die Verschließeinheit (11) angeformte Schwenklagerbereich (18) zwischen seinem Befestigungsbereich (19) und dem Schwenkteil einen außenseitig geschlossenen, sich beidseitig zwickelartig erweiternden, als Kippfeder wirkenden Bügelbereich (21) aufweist, der die Verschließeinheit (11) nach Überschreiten eines Öffnungswinkels von ca. 90° in eine Öffnungsstellung bei einem Winkel von mehr als 130° überführt und bei Unterschreiten eines Öffnungswinkels von ca. 90° die Verschließeinheit (11) auf einen Öffnungswinkel von weniger als 30° bewegt, worauf die Verschließeinheit aus dieser Position manuell in die abgedichtete Schließlage gedrückt werden kann.

7. Dosendeckel nach einem oder mehreren der vorhergehenden Ansprüche,
**dadurch gekennzeichnet,**
**dass** der Dichtungsrahmen (14) jeweils umlaufend eine innenliegende und eine außenliegende Aufnahmenut (15, 16) aufweist,
und **dass** der innenliegenden Nut (15) eine umlaufende Dichtrippe (13) und der außenliegenden Nut (16) eine umlaufende Rastrippe (12) an der Verschließeinheit (11) zugeordnet sind,
wobei zwischen der Dichtrippe (13) und einer Wandung der Aufnahmenut (15) eine in ihrer Neigung vorgebbare Schrägflächen-Dichtpaarung (23) vorgesehen ist und die Rastrippe (12) bezüglich einer Gegenrast (24) in der Aufnahmenut (16) in Öffnungsrichtung ein vorgebbares Spiel besitzt und/oder wobei eine Schnapp-Rastverbindung mit haptischer und/oder akustischer Rückmeldung gebildet ist.

8. Dosendeckel nach einem oder mehreren der vorhergehenden Ansprüche,
**dadurch gekennzeichnet,**
**dass** die dem Mikrospalt (8) benachbarte Einkerbung (9) in ihrem Verlauf unterschiedliche Dicke besitzt, wobei zum Zwecke des Abbaus von Überdruck in einer Dose der beim Öffnungsvorgang zuerst mit der Öffnungskraft beaufschlagte Bereich der Folie eine Einkerbung größerer Tiefe als ein sich daran anschließender, insbesondere kurzer Teilbereich geringerer Tiefe aufweist, auf den wiederum ein Kerbungsbereich mit einer Tiefe folgt, die im Wesentlichen gleich der Kerbungstiefe im Anfangsbereich der Öffnungsbewegung ist.

9. Dosendeckel nach Anspruch 8,
**dadurch gekennzeichnet,**
**dass** der Überdruckabbau während der Öffnungsbewegung der Verschließeinheit (11) innerhalb des Rastrippenspiels (25) erfolgt.

10. Dosendeckel nach einem oder mehreren der vorhergehenden Ansprüche,
**dadurch gekennzeichnet,**
**dass** der metallische Dosendeckel zumindest im Wesentlichen aus der gleichen Aluminiumlegierung wie das mit ihm verbundene Behälterteil besteht und als Aluminiumlegierung vorzugsweise eine Legierung der Serie "Aluminium 3000", insbesondere die Legierung 3104 verwendet ist.

11. Dosendeckel nach Anspruch 10,
**dadurch gekennzeichnet,**
**dass** die Materialstärke des Dosendeckels im Wesentlichen gleich der Materialstärke des Behälterteils ist und vorzugsweise zumindest den zweifachen Wert der Materialstärke des Behälterteils nicht überschreitet, wobei die Materialstärke des Behälterteils im Bereich von etwa 0,1 mm und weniger gelegen ist.

12. Dosendeckel nach einem oder mehreren der vorhergehenden Ansprüche,
**dadurch gekennzeichnet,**
**dass** die Verschließeinheit (11) an ihrem Außenumfang eine sich bis zur festen Deckelfläche (2) erstreckende Abdichtschürze (26) aufweist, die mit der Deckelfläche (2), vorzugsweise über die Haftlackschicht (7), stoffschlüssig verbunden ist.

13. Dose oder Behältnis aus Metall oder Kunststoff,
**dadurch gekennzeichnet,**
**dass** ein hermetisch dichter Verschluss durch Verwendung eines Dosendeckels nach einem oder mehreren der vorhergehenden Ansprüche geschaffen ist.

14. Verfahren zur Herstellung einer dichten, aufreißbaren oder eindrückbaren und wiederverschließbaren Öffnung in einem Dosendeckel nach einem oder mehreren der vorhergehenden Ansprüche,
wobei aus dem beschichteten Blechmaterial ein der Öffnung entsprechender Flächenbereich in der Weise ausgestanzt wird,
dass der an der beschichteten Seite angreifende Stanzstempel mit einer einen Glattschnittbereich und einen sich daran anschließenden Schrägschnittbereich des ausgestanzten Teils bewirkenden Matrize zusammenwirkt,
der ausgestanzte Flächenbereich, dessen Umfangskontur im Wesentlichen komplementär zur Matrizenform ist, wieder in die Öffnung im Blechmaterial eingesetzt und darin form- und/oder kraftschlüssig gehalten wird, und der zwischen Blechmaterial und ausgestanztem Flächenbereich gebildete Mikrospalt einseitig durch eine flächig auf das Blechmaterial aufkaschierte oder auflaminierte Folie abgedeckt wird, die dem Mikrospalt benachbart mit einer umlaufenden Schwächung bzw. Einkerbung versehen ist,
**dadurch gekennzeichnet,**
**dass** das Blechmaterial zumindest einseitig mit einer Haftlackschicht beschichtet wird, und das für den Stanzvorgang benötigte Schmiermittel ausschließlich und allein von der Haftlackschicht geliefert wird.

15. Verfahren nach Anspruch 14,
**dadurch gekennzeichnet,**
**dass** das Blechmaterial beidseitig und insbesondere vollflächig mit einer lebensmitteltauglichen Haftlackschicht versehen wird.

16. Verfahren nach Anspruch 14 oder 15,
**dadurch gekennzeichnet,**
**dass** als Folie eine vorgeformte, der Blechlagenform angepasste Folie verwendet und dieses Folien-Formteil mittels der Haftlackschicht mit der Blechlage verbunden wird.

17. Verfahren nach Anspruch 14,
**dadurch gekennzeichnet,**
**dass** der ausgestanzte Flächenbereich beim Rückhub des Stanzstößels mittels Federkraft form- und/oder kraftschlüssig in der Öffnung fixiert wird.

18. Verfahren nach Anspruch 14,
**dadurch gekennzeichnet,**
**dass** sich der Glattschnittbereich am ausgestanzten Flächenbereich über weniger als 50% der Materialstärke erstreckt und der Schrägschnittbereich sich vorzugsweise konisch erweitert.

## Claims

1. A metallic can lid (1) having a reclosable opening, in particular for beverage cans and for containers for storing foods and other liquid, pasty, powdery and/or solid products;
having a microgap (8) which extends peripherally, which is provided in the metallic lid surface and which is sealed off at an inner lid side by a film (6); having a notch (9) extending adjacent to said microgap (8) in the film; having a sealing frame (14) composed of a plastic material which is connected to the fixed lid surface (2) and which surrounds the opening region; having a closure unit (11) composed of a plastic material which is connected to the metallic lid region (10) which is disposed within the microgap (8) and which can be pivoted open, said closure unit (11) being pivotably attached to the fixed lid surface (2) and being provided with a tear-open member (17) disposed diametrically opposite the pivot bearing region (18),
wherein the sealing frame (14) and the closure unit (11) cooperate via sealing and latching ribs (12, 13) and associated receiving grooves (15, 16) and the metallic lid region (10) disposed within the annular microgap (8) is received and held in the opening region of the lid, in particular in a shape matched and/or force transmitting manner and preferably without a toothed arrangement; and wherein the film (6) provided at the inner lid side and covering the microgap (8) consists of a molded part, in particular a deep-drawn molded part, which reproduces the lower side structure of the can lid forming a continuous metallic surface,
**characterized in that**
both the sealing frame (14) is connected to the fixed lid surface (2) in a bonded manner and the closure unit (11) is connected to the metallic lid region (10) that can be pivoted open in a bonded manner, in particular by a thermal process using an adhesive lacquer layer (7) which is preferably suitable for use with food and/or has lubricating properties.

2. A can lid in accordance with claim 1,
**characterized in that**
the sealing frame (14), the closure unit (11) and the molded film part (6) are exactly mutually aligned with respect to the metallic lid surface by means of positioning studs which are preferably point-shaped and associated recesses which are in particular cup-shaped.

3. A can lid in accordance with claim 1,
**characterized in that**
the can lid is formed by a composite material in the form of a sheet metal layer (5), in particular composed of aluminum or tin plate, which is coated at both sides by an adhesive lacquer (7) and which is connected at the inner side to the molded film part (6) via the adhesive lacquer layer (7); and **in that** the sealing frame (14), the closure unit (11) and the pivot bearing region (18) are permanently connected to the sheet metal layer (5) via the outwardly disposed adhesive lacquer layer (7), in particular by plastic welding or by a so-called hot melt connection.

4. A can lid in accordance with claim 3,
**characterized in that**
the mechanical strength of the film component in the composite material (4) is selected such that, while ensuring the required overall strength of the composite material, the material thickness of the metallic component can be reduced, in particular by at least 1 %, in comparison with a film-free component.

5. A can lid in accordance with one or more of the preceding claims,
**characterized in that**
the molded film part (6) of the composite material (4) extends up to and into the bead margin (3) which is provided for connecting the lid to a can and which acts there as a sealing material and as corrosion protection.

6. A can lid in accordance with one or more of the preceding claims,
**characterized in that**
the pivot bearing region (18) molded at the closure unit (11) has, between its fastening region (19) and the pivot part, a hoop region (21) which is closed at the outer side, which expands in a gusset-like manner at both sides, which acts as a tilt spring, which moves the closure unit (11) into an open position at an angle of more than 130° after an opening angle of approximately 90° has been exceeded and which moves the closure unit (11) to an opening angle of less than 30° on a falling below of an opening angle of approximately 90°, whereupon the closure unit can be pressed manually from this position into a sealed off closed position.

7. A can lid in accordance with one or more of the preceding claims,
**characterized in that**
the sealing frame (14) has inwardly and outwardly disposed receiving grooves (15, 16) which are each peripheral;
and **in that** a peripheral sealing rib (13) is associated with the inwardly disposed groove (15) and a peripheral latching rib (12) is associated with the outwardly disposed groove (16) at the closure unit (11),
with a sealing pairing (23) of slanted surfaces predefinable in their inclination being provided between the sealing rib (13) and a wall of the receiving groove (15) and the latching rib (12) having a predefinable clearance in an opening direction with respect to a counter-latch (24) in the receiving groove (16), and/or with a snap-in latching connection having haptic and/or acoustic feedback being formed.

8. A can lid in accordance with one or more of the preceding claims,
**characterized in that**
the notch (9) adjacent to the microgap (8) has a different thickness in its extent, with, for the purpose of reducing excess pressure in a can, the region of the film that is first acted on by the opening force in the opening process having a notch with a larger depth than an adjoining part region which is in particular short, which has a smaller depth and which is in turn followed by a notch region having a depth which is substantially equal to the notch depth in the initial region of the opening movement.

9. A can lid in accordance with claim 8,
**characterized in that**
the excess pressure reduction takes place during the opening movement of the closure unit (11) within the latching rib clearance (25).

10. A can lid in accordance with one or more of the preceding claims,
**characterized in that**
the metallic can lid at least substantially comprises the same aluminum alloy as the container part connected to it and an alloy of the "Aluminum 3000" series, in particular the 3104 alloy, is preferably used as the aluminum alloy.

11. A can lid in accordance with claim 10,
**characterized in that**
the material thickness of the can lid is substantially equal to the material thickness of the container part and preferably at least does not exceed twice the value of the material thickness of the container part, with the material thickness of the container part being in a range of approximately 0.1 mm and less.

12. A can lid in accordance with one or more of the preceding claims,
**characterized in that**
the closure unit (11) has at its outer periphery a sealing apron (26) which extends up to the fixed lid surface (2) and which is connected to the lid surface (2) in a bonded manner, preferably via the adhesive lacquer layer (7).

13. A can or a container composed of metal or plastic,
**characterized in that**
a hermetically sealed closure is produced by using a can lid in accordance with one or more of the preceding claims.

14. A method of manufacturing a sealed opening, which can be torn open or pressed in and can be reclosed, in a can lid in accordance with one or more of the preceding claims,
wherein an areal region corresponding to the opening is punched out from the coated sheet metal material in such a manner
that the punching die engaging at the coated side cooperates with a die which brings about a smooth cut region and an adjoining slanted cut region of the punched out part;
the punched out areal region whose peripheral contour is substantially complementary to the die shape is again inserted into the opening in the sheet metal material and is held therein in a shape matched and/or force transmitting manner; and
the microgap formed between the sheet metal material and the punched out areal region is covered at the one side by a film which is areally coated onto or laminated onto the sheet metal material and which is provided with a peripheral weakening or notch adjacent to the microgap, **characterized in that** the sheet metal material is coated at least at one side by an adhesive lacquer layer; and **in that** the lubricant required for the punching process is supplied exclusively and solely by the adhesive lacquer layer.

15. A method in accordance with claim 14,
**characterized in that**
the sheet metal material is provided with an adhesive lacquer layer suitable for use with food at both sides and in particular over the full area.

16. A method in accordance with claim 14 or claim 15,
**characterized in that**
a preshaped film adapted to the sheet metal layer shape is used as the film and this molded film part is joined to the sheet metal layer by means of the adhesive lacquer layer.

17. A method in accordance with claim 14,
**characterized in that**
the punched out areal region is fixed in the opening in a shape matched and/or force transmitting manner by means of a spring force on a return stroke of the punch plunger.

18. A method in accordance with claim 14,
**characterized in that**
the smooth cut region at the punched out areal region extends over less than 50% of the material thickness and the slanted cut region preferably expands conically.

## Revendications

1. Couvercle de boîte (1) métallique présentant une ouverture refermable, en particulier pour des canettes de boissons et pour des récipients destinés à conserver des produits alimentaires et d'autres produits liquides, pâteux, pulvérulents et/ou solides,
présentant une micro-fente périphérique (8) prévue dans la surface métallique du couvercle et étanchée par une feuille (6) du côté intérieur du couvercle, et ayant une encoche (9) prévue dans la feuille et adjacente à ladite micro-fente,
un cadre d'étanchéité (14) en matière plastique relié à la surface de couverture fixe (2) et enfermant la zone d'ouverture, une unité de fermeture (11) en matière plastique reliée à la zone de couvercle métallique (10) pivotante située à l'intérieur de la micro-fente (8), unité qui est fixée de manière pivotante à la surface de couvercle fixe (2) et est munie d'un organe d'arrachage (17) diamétralement opposé à la zone d'appui pivotant (18),
dans lequel
le cadre d'étanchéité (14) et l'unité de fermeture (11) coopèrent l'un avec l'autre par l'intermédiaire de nervures d'étanchéité et d'enclenchement (12, 13) et de rainures de réception associées (15, 16), et la zone de couvercle métallique (10) située à l'intérieur de la micro-fente annulaire (8) est reçue et maintenue dans la zone d'ouverture du couvercle, en particulier par coopération de forme et/ou de force et de préférence sans denture, et
la feuille (6) prévue sur la face intérieure du couvercle et recouvrant la micro-fente (8) est constituée d'une pièce moulée, en particulier d'une pièce moulée par emboutissage profond, qui reproduit la structure de la face inférieure du couvercle de boîte formant une surface métallique continue,
**caractérisé en ce que**
le cadre d'étanchéité (14) est relié à la surface de couvercle fixe (2) et l'unité de fermeture (11) est reliée à la zone de couvercle (10) métallique pivotante par coopération de matière, en particulier par un procédé thermique utilisant une couche de laque adhésive (7), de préférence de qualité alimentaire et/ou ayant des propriétés lubrifiantes.

2. Couvercle de boîte selon la revendication 1,
**caractérisé en ce que**
le cadre d'étanchéité (14), l'unité de fermeture (11) et la pièce moulée de feuille (6) sont mutuellement alignés avec précision par rapport à la surface métallique du couvercle au moyen de boutons de positionnement de préférence ponctuels et d'évidements associés, en particulier en forme de gobelet.

3. Couvercle de boîte selon la revendication 1,
**caractérisé en ce que**
le couvercle de boîte est constitué d'un matériau composite sous la forme d'une couche de tôle (5), en particulier d'aluminium ou de fer blanc, revêtue sur les deux faces d'une laque adhésive (7) et reliée du côté intérieur à la pièce moulée de feuille (6) par la couche de laque adhésive (7), et **en ce que**
le cadre d'étanchéité (14), l'unité de fermeture (11) et la zone d'appui pivotant (18) sont reliés de manière permanente à la couche de tôle (5) par la couche de laque adhésive (7) extérieure, en particulier par soudage de matière plastique ou par une liaison dite hot melt.

4. Couvercle de boîte selon la revendication 3,
**caractérisé en ce que**
la résistance mécanique de la composante de feuille dans le matériau composite (4) est choisie de manière à ce que, tout en assurant la résistance globale requise du matériau composite, l'épaisseur de la composante métallique puisse être réduite, en particulier d'au moins 1 %, par rapport à une composante dépourvue de feuille.

5. Couvercle de boîte selon l'une ou plusieurs des revendications précédentes,
**caractérisé en ce que**
la pièce moulée de feuille (6) du matériau composite (4) s'étend jusque dans le bord rabattu (3) prévu pour relier le couvercle à une boîte et y sert de matériau d'étanchéité et de protection contre la corrosion.

6. Couvercle de boîte selon l'une ou plusieurs des revendications précédentes,
**caractérisé en ce que**
la zone d'appui pivotant (18) conformée sur l'unité de fermeture (11) présente, entre sa zone de fixation (19) et la partie pivotante, une zone en arceau (21) fermée du côté extérieur, s'élargissant des deux côtés à la manière d'un gousset et agissant comme un ressort de basculement, qui, lors d'un dépassement d'un angle d'ouverture d'environ 90°, transfère l'unité de fermeture (11) jusque dans une position d'ouverture sous un angle de plus de 130°, et qui, lors d'un passage au-dessous d'un angle d'ouverture d'environ 90°, déplace l'unité de fermeture (11) à un angle d'ouverture inférieur à 30°, suite à quoi l'unité de fermeture peut être pressée manuellement hors de cette position jusque dans la position de fermeture étanche.

7. Couvercle de boîte selon l'une ou plusieurs des revendications précédentes,
**caractérisé en ce que**
le cadre d'étanchéité (14) présente des rainures de réception périphériques (15, 16) intérieure et extérieure, et **en ce que**
une nervure d'étanchéité périphérique (13) est associée à la rainure intérieure (15) et une nervure d'enclenchement périphérique (12) est associée à la rainure extérieure (16), sur l'unité de fermeture (11), et
entre la nervure d'étanchéité (13) et une paroi de la rainure de réception (15) est prévu un appariement d'étanchéité de surfaces inclinées (23) dont l'inclinaison peut être prédéfinie, et la nervure d'enclenchement (12) présente un jeu prédéfini dans la direction d'ouverture par rapport à un cran complémentaire (24) dans la rainure de réception (16), et/ou il est prévu une liaison par encliquetage/enclenchement avec rétroaction haptique et/ou acoustique.

8. Couvercle de boîte selon l'une ou plusieurs des revendications précédentes,
**caractérisé en ce que**
l'encoche (9) adjacente à la micro-fente (8) présente des épaisseurs différentes dans son allure, de sorte que, en vue de réduire une surpression dans une boîte, la zone de la feuille soumise en premier à la force d'ouverture pendant l'opération d'ouverture présente une encoche de plus grande profondeur qu'une zone partielle adjacente, en particulier courte, de moindre profondeur, qui est à son tour suivie d'une zone d'encoche ayant une profondeur qui est sensiblement égale à la profondeur de l'encoche dans la zone initiale du mouvement d'ouverture.

9. Couvercle de boîte selon la revendication 8,
**caractérisé en ce que**
la surpression est réduite pendant le mouvement d'ouverture de l'unité de fermeture (11) à l'intérieur du jeu (25) de la nervure d'enclenchement.

10. Couvercle de boîte selon l'une ou plusieurs des revendications précédentes,
**caractérisé en ce que**
le couvercle métallique de la boîte est constitué au moins sensiblement du même alliage d'aluminium que la partie de récipient qui est reliée à celui-ci, et l'alliage d'aluminium utilisé est de préférence un alliage de la série "Aluminium 3000", en particulier l'alliage 3104.

11. Couvercle de boîte selon la revendication 10,
**caractérisé en ce que**
l'épaisseur du matériau du couvercle de la boîte est sensiblement égale à l'épaisseur du matériau de la partie de récipient et, de préférence, ne dépasse pas au moins le double de l'épaisseur du matériau de la partie de récipient, l'épaisseur du matériau de la partie de récipient étant de l'ordre d'environ 0,1 mm et moins.

12. Couvercle de boîte selon l'une ou plusieurs des revendications précédentes,
**caractérisé en ce que**
l'unité de fermeture (11) possède à sa périphérique extérieure une jupe d'étanchéité (26) s'étendant jusqu'à la surface fixe (2) du couvercle, qui est reliée par coopération de matière à la surface (2) du couvercle, de préférence par l'intermédiaire de la couche de laque adhésive (7).

13. Boîte ou récipient en métal ou en matière plastique,
caractérisé(e) en ce que
une obturation hermétique est créée en utilisant un couvercle de boîte selon l'une ou plusieurs des revendications précédentes.

14. Procédé de réalisation d'une ouverture étanche, déchirable ou enfonçable et refermable dans un couvercle de boîte selon l'une ou plusieurs des revendications précédentes,
dans lequel
une zone de surface correspondant à l'ouverture est poinçonnée dans le matériau de tôle revêtu, de telle sorte que le poinçon agissant sur la face revêtue coopère avec une matrice procurant une zone de coupe lisse et une zone de coupe inclinée adjacente de la pièce poinçonnée,
la zone de surface poinçonnée, dont le contour périphérique est sensiblement complémentaire de la forme de la matrice, est réinsérée dans l'ouverture du matériau de tôle et y est maintenue par coopération de forme et/ou de force, et
la micro-fente formée entre le matériau de tôle et la zone de surface poinçonnée est recouverte sur un côté par une feuille qui est laminée ou contrecollée de façon surfacique sur le matériau de tôle et qui est pourvue d'un affaiblissement ou d'une encoche périphérique adjacent(e) à la micro-fente, **caractérisé en ce que**
le matériau de tôle est revêtu sur au moins une face d'une couche de laque adhésive, et le lubrifiant nécessaire à l'opération de poinçonnage est fourni exclusivement et uniquement par la couche de laque adhésive.

15. Procédé selon la revendication 14,
**caractérisé en ce que**
le matériau de tôle est pourvu sur les deux faces et en particulier sur toute la surface d'une couche de laque adhésive de qualité alimentaire.

16. Procédé selon la revendication 14 ou 15,
**caractérisé en ce que**
une feuille préformée adaptée à la forme de la couche de tôle est utilisée comme feuille et cette pièce moulée de feuille est reliée à la couche de tôle au moyen de la couche de laque adhésive.

17. Procédé selon la revendication 14,
**caractérisé en ce que**
la zone de surface poinçonnée est fixée dans l'ouverture par coopération de forme et/ou de force lors du retour du poinçon au moyen d'une force élastique.

18. Procédé selon la revendication 14,
**caractérisé en ce que**
la zone de coupe lisse sur la zone de surface poinçonnée s'étend sur moins de 50 % de l'épaisseur du matériau, et la zone de coupe inclinée s'élargit de préférence coniquement.
